# FASCICULE DE BREVET EUROPEEN

(11) **EP 0 492 394 B1**
(45) Date de publication et mention de la délivrance du brevet: **27.12.1996**
(21) Numéro de dépôt: 91121693.5
(22) Date de dépôt: 18.12.1991
(51) Int. Cl.: G01N 27/90

(54) **Dispositif de contrôle non destructif à courants de Foucault, à commutation flux additifs-flux soustractifs**
Gerät zur zerstörungsfreien Untersuchung mit Wirbelströmen mit Umschaltung zur Flussaddition-Flusssubtraktion
Apparatus for the non-destructive testing of Eddy-Currents with commutation for flux-addition -flux- subtraction

(30) Priorité: 28.12.1990 FR 9016469
(43) Date de publication de la demande: 01.07.1992
(73) Titulaire: COMPAGNIE GENERALE D'AUTOMATISME CGA-HBS, F-91220 Bretigny sur Orge (FR)
(72) Inventeur: Tasca, Jean-Pierre, F-91700 Sainte Geneviève des Bois (FR)
(74) Mandataire: Weinmiller, Jürgen

(56) Documents cités:
- GB-A- 2 035 571
- US-A- 3 609 531
- US-A- 3 866 116

## Description

L'invention concerne un dispositif de contrôle non destructif à courants de Foucault, à commutation flux additifs-flux soustractifs. Un tel dispositif permet, par exemple, de détecter des failles, ou des inclusions de matériaux étrangers, ou des variations de composition dans une pièce métallique. Il met en oeuvre un procédé consistant à engendrer des courants de Foucault en un point de la pièce à contrôler, en soumettant ce point à un champ magnétique alternatif, et à détecter une variation de ces courants de Foucault, par rapport à une référence, en détectant une variation d'impédance dans au moins une bobine utilisée pour engendrer ces courants de Foucault.

Le plus souvent, le procédé est un procédé différentiel consistant à : engendrer des courants de Foucault en deux points voisins d'une même pièce au moyen de deux bobines identiques parcourues par une même intensité, soit en phase, soit en opposition de phase; et à mesurer la différence des impédances de ces deux bobines. Cette différence est nulle lorsque les deux points de la pièce à contrôler ont la même composition, même si la température varie, et sans étalonnage préalable. La différence des impédances est non nulle si la composition de la pièce n'est pas identique aux deux points où sont situées les bobines.

Les deux bobines étant situées en deux points voisins, leurs flux magnétiques s'additionnent ou se soustraient, selon le sens de chacun des courants qui parcourent les deux bobines, et selon le sens de bobinage de chacune de ces bobines. Les deux bobines constituent une sonde qui peut être éloignée du reste du dispositif de contrôle. Chaque bobine est reliée au reste du dispositif de contrôle par un câble coaxial qui peut avoir une grande longueur, jusqu'à 200 mètres. L'expérience montre qu'il est parfois possible d'affiner le résultat d'un contrôle en débranchant et en permutant les deux bornes de l'une des bobines, pour inverser son flux.

Ce procédé de commutation flux additifs-flux soustractifs n'est pas très pratique, et il est même pratiquement impossible à utiliser si les bobines sont très éloignées du reste du dispositif de contrôle et sont pratiquement inaccessibles. Le but de l'invention est de remédier à cet inconvénient des dispositifs connus.

L'objet de l'invention est un dispositif de contrôle non destructif à courants de Foucault, à commutation flux additifs-flux soustractifs, comportant :
- des moyens pour fournir un premier et un second courant alternatif ayant la même fréquence;
- deux bobines analogues parcourues respectivement par le premier et le second courant, ces deux bobines étant voisines et chacune étant couplée électromagnétiquement à une pièce à contrôler, pour y créer deux flux qui sont soit additifs; soit soustractifs, selon les sens des deux courants et selon les sens de bobinage des deux bobines;
- des moyens pour mesurer la différence des impédances des deux bobines. Un tel dispositif est connu du document GB-A-2 035 571.
Le dispositif est caractérisé en ce que pour permettre une commutation flux additifs-flux soustractifs, les moyens pour fournir le premier et le second courant comportent :
- des moyens pour fournir un premier signal d'excitation;
- des moyens pour fournir un second signal d'excitation en opposition de phase avec le premier signal d'excitation;
- des moyens pour alimenter une bobine par le premier signal d'excitation et pour alimenter l'autre bobine soit par le premier soit par le second signal d'excitation, en fonction d'une commande;
et en ce que les moyens pour mesurer la différence des impédances comportent des moyens pour déterminer soit la somme, soit la différence des deux tensions aux bornes des deux bobines, en fonction de ladite commande.

Le dispositif ainsi caractérisé permet une commutation flux additifs-flux soustractifs sans intervention manuelle dans la sonde comportant les deux bobines, puisque l'inversion de l'un des flux est obtenu par des moyens qui peuvent être situés à distance des deux bobines.

L'invention sera mieux comprise et d'autres caractéristiques apparaîtront à l'aide de la description ci-dessous et des figures l'accompagnant :
- la figure 1 représente le schéma synoptique d'un exemple de réalisation d'un dispositif classique de contrôle non destructif à courants de Foucault;
- la figure 2 représente la sonde de cet exemple du dispositif classique, après permutation des conducteurs alimentant l'une des bobines, pour réaliser une commutation flux additifs-flux soustractifs, selon le procédé connu;
- la figure 3 représente le schéma synoptique d'un exemple de réalisation du dispositif selon l'invention.

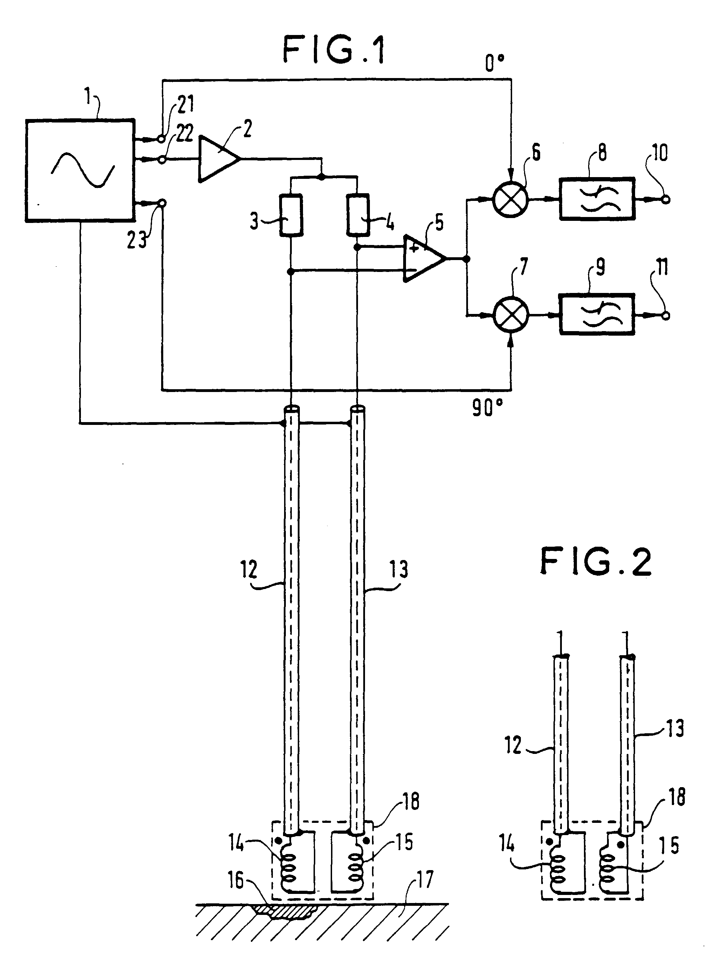

L'exemple de réalisation de dispositif classique, représenté sur la figure 1, comporte :
- un générateur de signal sinusoïdal, 1;
- un amplificateur de puissance, 2;
- deux impédances identiques, 3 et 4;
- un amplificateur différentiel, 5;
- un premier détecteur synchrone constitué d'un multiplieur analogique 6 et d'un filtre passe bas 8;
- un second détecteur synchrone constitué d'un multiplieur analogique 7 et d'un filtre passe bas 9;
- deux bobines identiques, 14 et 15, constituant une sonde 18 éloignée du reste du dispositif de contrôle, et reliées à celui-ci par deux câbles coaxiaux 12 et 13.

La sonde 18 est placée à la surface d'une pièce métallique 17 qui est à contrôler. La sonde 18 est généralement déplacée, à une vitesse constante, sur cette surface pour la balayer entièrement. Les bobines 14 et 15 sont couplées électromagnétiquement avec la pièce 17 et sont couplées entre elles, à cause de leur proximité. Les bobines 14 et 15 sont parcourues par deux courants alternatifs sinusoïdaux, de même sens. Dans l'exemple représenté sur la figure 1, les deux bobines 14, 15 étant bobinées dans le même sens, les flux magnétiques des deux bobines s'additionnent.

Lorsqu'un défaut 16 est situé en vis-à-vis de la bobine 14, par exemple, les courants de Foucault créés par la bobine 14 n'ont pas la même configuration que ceux créés par la bobine 15. Ceci se traduit par une différence entre les impédances complexes des bobines 14 et 15. Dans certains cas, il est utile d'inverser le flux dans l'une des bobines pour affiner le résultat d'un contrôle.

La figure 2 représente la même sonde 18, mais dans laquelle les extrémités des deux conducteurs du câble coaxial 13 ont été permutées aux bornes de la bobine 15 de telle sorte que les flux créés par les bobines 14 et 15 se soustraient au lieu de s'additionner.

Une entrée de l'amplificateur de puissance 2 est reliée à une borne de sortie 22 du générateur 1, qui fournit un signal sinusoïdal d'excitation. Une sortie de l'amplificateur différentiel 5 est reliée à une première entrée du multiplieur 6 et à une première entrée du multiplieur 7. Une seconde entrée du multiplieur 6 est reliée à une borne de sortie 21 du générateur 1 qui fournit un premier signal de référence, sinusoïdal, de même fréquence que le signal fourni par la borne de sortie 22 pour l'excitation. La seconde entrée du multiplieur 7 est reliée à une borne de sortie 23 du générateur 1 qui fournit un second signal de référence, sinusoïdal, déphasé de 90° par rapport au premier signal de référence.

Les sorties des multiplieurs 6 et 7 sont reliées respectivement aux entrées d'un filtre passe-bas 8 et d'un filtre passe-bas 9. Les sorties des filtres 8 et 9 sont reliées à deux bornes de sortie 10 et 11 du dispositif de contrôle, fournissant respectivement deux signaux représentant respectivement la partie réelle et la partie imaginaire de la différence des impédances complexes des bobines 14 et 15. Ces signaux peuvent être enregistrés par un enregistreur graphique ou peuvent être traités par un calculateur numérique, par exemple.

Les courants d'excitation des bobines 14 et 15 sont fournis par la sortie de l'amplificateur de puissance 2, par l'intermédiaire des impédances 3 et 4 qui constituent, avec les bobines 14 et 15 un pont de Wheatstone. Une première extrémité de l'impédance 3 et une première extrémité de l'impédance 4 sont reliées à la sortie de l'amplificateur de puissance 2. Une première extrémité de la bobine 14 est reliée à un potentiel de référence du dispositif de contrôle par le blindage du câble 12. Une première extrémité de la bobine 15 est reliée au potentiel de référence du dispositif de contrôle par le blindage du câble 13. Un seconde extrémité de la bobine 14 est reliée à une seconde extrémité de l'impédance 3 par le conducteur central du câble 12. Une seconde extrémité de la bobine 15 est reliée à une seconde extrémité de l'impédance 4 par l'intermédiaire du conducteur central du câble 13. Les secondes extrémités des impédances 3 et 4 constituent les sorties du pont de Wheatstone et sont reliées respectivement à une entrée inversante et à une entrée non inversante de l'amplificateur différentiel 5. Un calcul montre que, pour un signal sinusoïdal, la tension de sortie du pont est une fonction des impédances complexes 14 et 15. Les impédances 3 et 4 sont constituées chacune d'une résistance pure et d'une inductance en parallèle, dont les valeurs sont choisies de telle sorte que le pont de Wheatstone a un maximum de sensibilité.

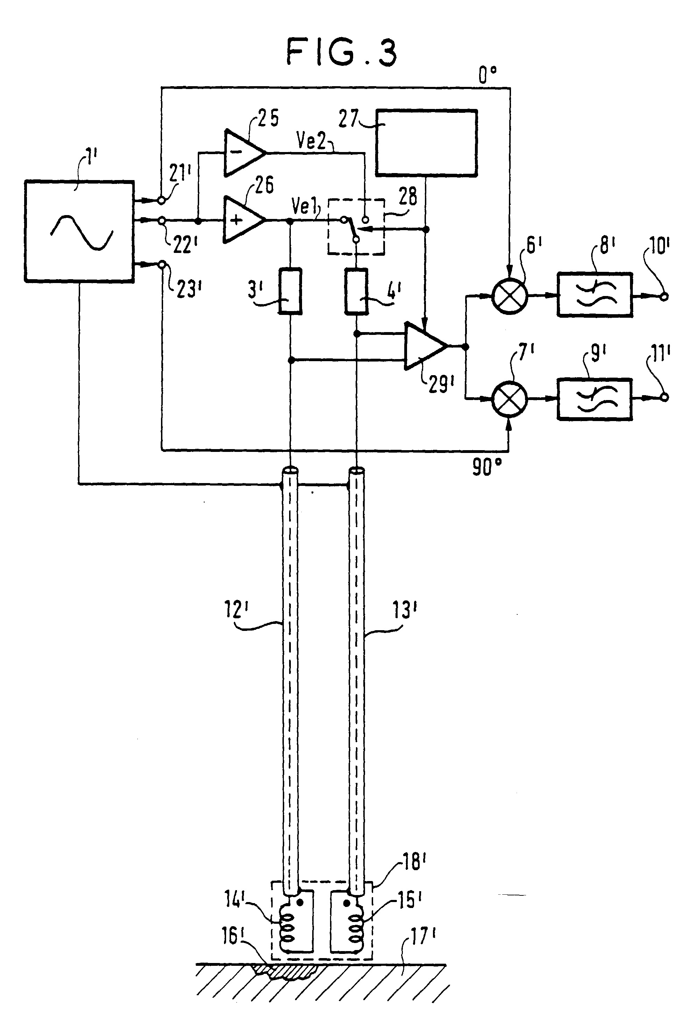

La figure 3 représente le schéma synoptique d'un exemple de réalisation du dispositif selon l'invention, les éléments analogues à ceux du dispositif classique portent les mêmes références avec l'indice '.

Cette exemple de réalisation comporte :
- un générateur 1';
- deux impédances identiques, 3' et 4';
- deux bobines identiques, 14' et 15', constituant une sonde 18' et reliées au reste du dispositif de contrôle par deux câbles coaxiaux, 12' et 13';
- deux amplificateurs de puissance, 25 et 26;
- un dispositif de commande 27, qui est, par exemple, un commutateur manuel fournissant un signal binaire de commande, pour la commutation flux additifs-flux soustractifs;
- un relais inverseur, 28;
- un amplificateur 29 ayant deux entrées de signal et une entrée de commande, pouvant additionner ou soustraire les tensions appliquées sur ces deux entrées de signal, selon la valeur d'un signal binaire de commande appliqué à l'entrée de commande;
- un détecteur synchrone constitué d'un multiplieur analogique 6' et d'un filtre passe-bas 8';
- un détecteur synchrone constitué d'un multiplieur analogique 7' et d'un filtre passe-bas 9'.

Par rapport au dispositif classique, l'amplificateur de puissance 2 est remplacé par deux amplificateurs de puissance, 25, 26 dont les gains -A,+A ont la même valeur absolue A mais des signes opposés, et dont les entrées sont reliées toutes les deux à la borne de sortie 22' du générateur 1', qui leur fournit un signal sinusoïdal d'excitation.

L'amplificateur différentiel 5 est remplacé par l'amplificateur 29. Ses deux entrées de signal sont reliées respectivement aux deux sorties d'un pont de Wheatstone constituées par les deux impédance, 3' et 4', et par les deux bobines 14' et 15'. La sortie de l'amplificateur 29 est reliée à des premières entrées des deux multiplieurs 6' et 7'. Des secondes entrées des multiplieurs 6' et 7' sont reliées respectivement à deux bornes de sortie 21' et 23' du générateur 1', qui leur fournissent deux signaux de référence, sinusoïdaux déphasés de 90°. Les sorties des multiplieurs 6' et 7' sont reliées respectivement aux entrées de deux filtres passe-bas 8' et 9'. Les sorties de ces derniers sont reliées respectivement à deux bornes de sortie 10' et 11' du dispositif de contrôle, fournissant respectivement deux signaux représentant respectivement la partie réelle et la partie imaginaire de la différence des impédances des bobines 14' et 15'.

Le relais inverseur 28 possède : deux entrées de signal, une sortie de signal, et une entrée de commande. Il relie sa sortie à une entrée choisie parmi deux. Les deux entrées du relais 28 sont reliées respectivement aux sorties des amplificateurs 25 et 26. La sortie du relais 28 est reliée à une première extrémité de l'impédance 4'. La sortie de l'amplificateur 26 est reliée en outre à une première extrémité de l'impédance 3'. Les entrées de commande du relais 28 et de l'amplificateur 29 reçoivent le signal binaire fourni par le dispositif de commande 27.

Une première extrémité de la bobine 14' est reliée à un potentiel de référence du dispositif de contrôle, par le blindage du câble 12'. Une première extrémité de la bobine 15' est reliée au potentiel de référence du dispositif de contrôle, par le blindage du câble 13'. Une seconde extrémité de la bobine 14 ' est reliée à une seconde extrémité de l'impédance 3', par le conducteur central du câble 12'. Une seconde extrémité de la bobine 15' est reliée à une seconde extrémité de l'impédance 4', par l'intermédiaire du conducteur central du câble 13'. Les secondes extrémités des impédances 3' et 4' constituent les sorties du pont de Wheatstone et sont reliées respectivement aux deux entrées de signal de l'amplificateur 29.

Pour une valeur du signal binaire de commande, le relais 28 est dans une première position reliant la première extrémité de l'impédance 4' à la sortie de l'amplificateur 26. Les impédances 3' et 4' reçoivent alors un même signal d'excitation Ve1. Les bobines 14' et 15' sont alors traversées par des flux magnétiques de même orientation et qui s'additionnent. Pour cette valeur du signal de commande, l'amplificateur 29 fonctionne comme un amplificateur différentiel. L'ensemble du dispositif de contrôle fonctionne exactement comme le dispositif classique décrit précédemment en référence à la figure 1.

Pour un signal de commande ayant une valeur opposée, le relais 28 relie la première extrémité de l'impédance 4' à la sortie de l'amplificateur 25. Les impédances 3' et 4' reçoivent alors deux signaux d'excitation différents, Ve1 et Ve2, qui ont la même amplitude mais un signe opposé. Les bobines 14' et 15' sont alors parcourues par deux courants opposés qui créent deux flux magnétiques qui se soustraient. Pour cette valeur du signal de commande, l'amplificateur 29 additionne les deux tensions qu'il reçoit sur ses entrées, et amplifie leur somme. Ce changement par rapport au cas précédent, compense le fait que le sens du courant a été inversé dans l'impédance 4' et la bobine 15'. Le fonctionnement des détecteurs synchrones 6', 8' et 7', 9' est analogue à celui des détecteurs synchrones d'un dispositif de contrôle classique.

La réalisation d'un amplificateur 29 qui peut être soustracteur ou additionneur en fonction d'un signal binaire de commande, est à la portée de l'homme de l'art. Il peut être réalisé, par exemple, au moyen d'un amplificateur opérationnel, d'un inverseur électromécanique ou à semi-conducteur, et de quelques résistances.

La portée de l'invention n'est pas limitée à l'exemple de réalisation décrit ci-dessus. Il est notamment à la portée de l'homme de l'art de réaliser d'autres moyens pour fournir deux signaux d'excitation en opposition de phase. Par exemple, au moyen d'un transformateur à point milieu. Les générateurs 1 et 1' fournissent un signal sinusoïdal, mais la portée de l'invention n'est pas limitée à ce type de signal d'excitation. Il existe de nombreuses variantes de réalisation de l'amplificateur 29. Par exemple, il peut être constitué d'un amplificateur additionneur monté en parallèle avec un amplificateur soustracteur ayant le même gain, leurs sorties étant commutées par un inverseur pour sélectionner le signal fourni par l'un des deux amplificateurs.

## Revendications

1. Dispositif de contrôle non destructif à courants de Foucault, à commutation flux additifs-flux soustractifs, comportant :
- des moyens (1', 25, 26) pour fournir un premier et un second courant alternatif ayant la même fréquence;
- deux bobines analogues (14', 15') parcourues respectivement par le premier et le second courant, ces deux bobines étant voisines et chacune étant couplée électromagnétiquement à une pièce (17') à contrôler, pour y créer deux flux qui sont soit additifs; soit soustractifs, selon les sens des deux courants et selon les sens de bobinage des deux bobines;
- des moyens (29, 6' à 9') pour mesurer la différence des impédances des deux bobines;
caractérisé en ce que pour permettre une commutation flux additifs-flux soustractifs, les moyens pour fournir le premier et le second courant comportent :
- des moyens (26) pour fournir un premier signal d'excitation (Ve1);
- des moyens (25) pour fournir un second signal d'excitation (Ve2) en opposition de phase avec le premier signal d'excitation;
- des moyens (28) pour alimenter une bobine (14') par le premier signal d'excitation (Ve1) et pour alimenter l'autre bobine (15') soit par le premier soit par le second signal d'excitation (Ve1 ou Ve2), en fonction d'une commande;
et en ce que les moyens (29, 6' à 9') pour mesurer la différence des impédances comportent des moyens (29) pour déterminer soit la somme, soit la différence des deux tensions aux bornes des deux bobines, en fonction de ladite commande.

2. Dispositif selon la revendication 1, caractérisé en ce que les moyens pour fournir un premier signal d'excitation (Ve1) et les moyens pour fournir un second signal d'excitation (Ve2) comportent respectivement deux amplificateurs de puissance (25, 26) dont les gains ont la même valeur absolue et des signes opposés, et dont les entrées reçoivent un même signal.

3. Dispositif selon la revendication 1, caractérisé en ce que les moyens pour déterminer soit la somme, soit la différence des tensions aux bornes des deux bobines (14', 15') en fonction de ladite commande, comportent un amplificateur (29) à deux entrées et qui fonctionne soit en additionneur, soit en soustracteur, pour deux tensions appliquées auxdites entrées, selon la valeur d'un signal binaire de commande.

## Patentansprüche

1. Vorrichtung zur zerstörungsfreien Prüfung eines Bauteils mittels Foucault-Strömen und Umschaltung von additivem zu subtraktivem Fluß, wobei die Vorrichtung aufweist:
- Mittel (1', 25, 26), die einen ersten und einen zweiten Wechselstrom mit gleicher Frequenz liefern,
- zwei einander gleichende Spulen (14', 15'), die von einem ersten bzw. zweiten Strom durchflossen werden und einander benachbart sowie elektromagnetisch mit einem zu prüfenden Bauteil (17') gekoppelt sind, um dort zwei Flüsse zu erzeugen, die je nach der Richtung der beiden Ströme und dem Wicklungssinn der beiden Spulen entweder additiv oder subtraktiv sind,
- Mittel (29, 6' bis 9'), um den Unterschied der Impedanz der beiden Spulen zu messen,
dadurch gekennzeichnet, daß die Mittel zur Lieferung des ersten und zweiten Stroms für eine Umschaltung von additivem zu subtraktivem Fluß aufweisen:
- Mittel (26), die ein erstes Anregungssignal (Vel) liefern,
- Mittel (25), die ein zweites Anregungssignal (Ve2) in Gegenphase zum ersten Anregungssignal liefern,
- Mittel (28), die eine Spule (14') mit dem ersten Anregungssignal (Vel) und in Abhängigkeit von einer Steuerung die andere Spule (15') entweder mit dem ersten oder dem zweiten Anregungssignal (Vel oder Ve2) speisen,
und daß die Mittel (26, 6' bis 9') zur Messung des Unterschieds der Impedanzen Mittel (29) aufweisen, um entweder die Summe oder die Differenz der beiden Spannungen an den Klemmen der beiden Spulen abhängig von der Steuerung zu bestimmen.

2. Vorrichtung nach Anspruch 1, dadurch gekennzeichnet, daß die Mittel zur Lieferung eines ersten Anregungssignals (Ve1) und die Mittel zur Lieferung eines zweiten Anregungssignals (Ve2) je einen Leistungsverstärker (25, 26) enthalten, deren Verstärkungsgrade den gleichen Absolutwert, aber entgegengesetzte Vorzeichen besitzen und deren Eingänge das gleiche Signal empfangen.

3. Vorrichtung nach Anspruch 1, dadurch gekennzeichnet, daß die Mittel zur Bestimmung entweder der Summe oder der Differenz der Spannungen an den Klemmen der beiden Spulen (14', 15') abhängig von der Steuerung einen Verstärker (29) mit zwei Eingängen besitzen, der je nach dem Wert eines binären Steuersignals entweder als Addierer oder Subtrahierer für zwei Spannungen wirkt, die an die Eingänge angelegt werden.

## Claims

1. Non-destructive eddy current test device using additive flux/subtractive flux switching comprising:
- means (1', 25, 26) for supplying first and second alternating currents at the same frequency;
- two analogous coils (14', 15') respectively carrying the first and the second current, said two coils being adjacent each other and each being electromagnetically coupled to a part under test (17') so as to create therein two fluxes which are either added or subtracted according to the directions of the two currents and according to the directions in which the two coils are wound;
- means (29, 6' to 9') for measuring the difference between the impedances of the two coils;
characterised in that, to enable additive flux/subtractive flux switching, the means for supplying the first and second current comprise:
- means (26) for supplying a first excitation signal (Ve1);
- means (25) for supplying a second excitation signal (Ve2) in phase opposition to the first excitation signal;
- means (28) for feeding the first excitation signal (Ve1) to one coil (14') and for feeding to the other coil (15') either the first or the second excitation signal (Vel or Ve2), as determined by control means;
and in that the means (29, 6' to 9') for measuring the impedance difference comprise means (29) for obtaining either the sum or the difference of the two voltages at the terminals of the two coils as determined by said control means.

2. Device according to claim 1 characterised in that the means for supplying a first excitation signal (Ve1) and the means for supplying a second excitation signal (Ve2) respectively comprise two power amplifiers (25, 26) of equal and opposite gain and whose inputs receive the same signal.

3. Device according to claim 1 characterised in that the means for obtaining either the sum or the difference of the voltages at the terminals of the two coils (14', 15') as determined by said control means comprise a two-input amplifier (29) adapted to add or subtract two voltages applied to said inputs according to the value of a binary control signal.
